# EUROPÄISCHE PATENTSCHRIFT

(11) **EP 1 629 262 B1**
(45) Veröffentlichungstag und Bekanntmachung des Hinweises auf die Patenterteilung: **02.11.2006**
(21) Anmeldenummer: 04731926.4
(22) Anmeldetag: 10.05.2004
(51) Int. Cl.: G01M 3/20, H01J 49/28

(54) **LECKRATEN-MESSVORRICHTUNG**
LEAK RATE MEASURING DEVICE
DISPOSITIF DE MESURE DU DEBIT DE FUITE

(30) Priorität: 31.05.2003 DE 10324766
(43) Veröffentlichungstag der Anmeldung: 01.03.2006
(73) Patentinhaber: Inficon GmbH, 50968 Köln (DE)
(72) Erfinder: GERDAU, Ludolf, 50189 Elsdorf (DE); ROLFF, Randolf, 50169 Kerpen-Horrem (DE); KILIAN, Ralf, 50999 Köln (DE)
(74) Vertreter: Selting, Günther
(86) Internationale Anmeldenummer: PCT/EP2004/004949
(87) Internationale Veröffentlichungsnummer: WO 2004/106881

(56) Entgegenhaltungen:
- US-A- 4 409 482
- PATENT ABSTRACTS OF JAPAN Bd. 2000, Nr. 05, 14. September 2000 (2000-09-14) & JP 2000 046680 A (ULVAC JAPAN LTD), 18. Februar 2000 (2000-02-18)
- PATENT ABSTRACTS OF JAPAN Bd. 015, Nr. 095 (P-1176), 7. März 1991 (1991-03-07) & JP 02 309226 A (ULVAC CORP), 25. Dezember 1990 (1990-12-25)

## Beschreibung

Die Erfindung betrifft ein Verfahren zur Leckraten-Messung und eine Leckraten-Messvorrichtung mit einer Vakuum-Pumpvorrichtung zum Abpumpen von Gas aus einem Behälter, einem Bahn-Spektrometer (z.B. ein Sektorfeld-Massenspektrometer) zur masseabhängigen Ablenkung von Ionen des Gases durch Variation einer die Ablenkung bestimmender Einflussgröße (z.B. der Anodenspannung) und zur Bestimmung der einen Ionenfänger treffenden Ionenmenge.

Kleinste Leckraten eines Behälters können nach der Vakuum-Methode zuverlässig festgestellt werden. Je kleiner die Leckrate ist, umso größer sind die Anforderungen an Sauberkeit und Endvakuum. Bei der lokalen Lecksuche wird mit einer Vakuumpumpe der Behälter so weit evakuiert, bis der für den Leckdetektor notwendige Prüfdruck erreicht ist. Leckverdächtige Stellen des Behälters werden dann außen mit einem feinen Testgasstrahl abgesprüht. In den Behälter eindringendes Testgas wird von der Vakuum-Pumpvorrichtung abgepumpt und von einem Massenspektrometer erkannt. Eine derartige Leckraten-Messvorrichtung ist beschrieben in der Broschüre "Industrielle Dichtheits-Prüfung" der Firma Leybold-Heraeus GmbH von 1987.

Die bei der Leckratenmessung verwendeten Massenspektrometer sind Bahn-Spektrometer, wie z.B. das Sektorfeld-Massenspektrometer, bei dem Gasionen einen bogenförmigen Weg durchlaufen und dann eine Öffnung in einer Blende passieren, um auf eine Ionenfänger-Elektrode zu treffen. Diese ist mit einem hochempfindlichen Elektrometerverstärker verbunden, der den sehr kleinen Ionenstrom so weit verstärkt, dass er einem Folgeverstärker zugeführt werden kann. Einer Anode wird eine massenspezifische Anodenspannung zugeführt. Dies führt zu einer bestimmten Geschwindigkeit der Ionen. Auf diese Weise können in Abhängigkeit von dem jeweiligen Wert der Anodenspannung ionisierte Teilchen mit unterschiedlichen spezifischen Massen den Ionenweg durchlaufen und auf den Ionenfänger treffen. Durch Wahl der Anodenspannung kann die betreffende spezifische Masse, die untersucht werden soll, festgelegt werden.

Die Oberbegriffe der Patentansprüche 1 und 4 gehen jeweils aus von JP 2000 046680 A. Hierin ist ein Verfahren zur Leckraten-Messung eines nachzuweisenden Gases bestimmter molekularer Masse beschrieben. Das der bestimmten molekularen Masse entsprechende Messsignal wird von Signalen benachbarter Massen überlagert. Zur Gewinnung des Messsignals der vorbestimmten Masse erfolgt eine Modulation über die gesamte Signalkurve hinweg, wobei sich die Modulationstiefe über die gesamte Glockenkurve des referierenden Peaks erstreckt. Anschließend erfolgt eine Filterung der bei der Modulation entstehenden doppelten Modulationsfrequenz. Dadurch kann man eine bessere Unterdrückung des durch andere Massen verursachten Hintergrunds des Messsignals erreichen. Die Modulation erfolgt über die gesamte Glockenkurve hinweg von Null auf maximale Amplitude und darüber hinaus wieder auf Null, und anschließend auf dem selben Wege zurück. Dies bedeutet eine sehr große Modulationstiefe, wodurch Offset-Größen eliminiert werden können.

Folgende verschiedene Modulationsmöglichkeiten sind möglich:
a. Beschleunigungsspannung (hier Anodenspannung)
b. Magnetfeld
c. Eintrittsrichtung-/Ort der Ionen über modulierte Ablenkspannungen

Als Testgas für Lecksuchgeräte wird häufig Helium verwendet. Helium hat die spezifische Masse M4. Eine Schwierigkeit besteht in der eingeschränkten Selektivität des Massenspektrometers. Dadurch verschmelzen die eigentlich voneinander getrennten Signalspitzen der ganzzahligen spezifischen Massen miteinander. Beispielsweise strahlt eine Komponente des M3-Signals in den Bereich des M4-Signals hinein, so dass ein Gas der spezifischen Masse M4 (z.B. Helium) nicht mit genügender Selektivität gemessen werden kann, wenn eine große Menge eines M3-Gases vorhanden ist. Dies ist in der Praxis durchaus der Fall. An Behältern für die Leckmessung setzt sich sowohl außen als auch innen Wasser ab. Die H₂-Komponente von Wasser beinhaltet auch M3-Anteile, dessen Anwesenheit die Messung eines M4-Gases empfindlich stört. Zwar kann man die Messung unter Vakuumbedingungen so lange durchführen, bis die Bestandteile des Wassers weit genug abgepumpt sind, jedoch bedarf es hierzu einer sehr langen Pumpzeit, mit der Folge, dass bis zur stabilen Anzeige der Leckrate viel Zeit verstreicht. Der Einfluss des Wassers auf das Messergebnis wird als "Wasseruntergrund" bezeichnet.

Der Erfindung liegt die Aufgabe zugrunde, ein Verfahren zur Leckraten-Messung und eine Leckraten-Messvorrichtung anzugeben, mit denen bei selektiver Messung im Bereich der spezifischen Masse des Testgases die Einflüsse benachbarter Massen eliminiert werden, ohne längere Messzeiten hinnehmen zu müssen.

Die Lösung dieser Aufgabe erfolgt bei dem Verfahren mit den Merkmalen des Patentanspruchs 1 und bei der Vorrichtung mit den Merkmalen des Patentanspruchs 4.

Erfindungsgemäß erfolgt die Messung und Modulation nur in einem begrenzten Bereich um den Punkt der höchsten Empfindlichkeit für die nachzuweisende Masse. Die Modulationstiefe ist auf den Spitzenbereich des Stromsignals beschränkt, indem der Ausläufer des Einflusses der benachbarten Massen im wesentlichen geradlinigen Verlauf hat. Hierbei kann man durch Betrachtung der einzelnen Frequenzanteile das Strom-Signal der nachzuweisenden Masse vom Strom-Signal der benachbarten Massen optimal trennen. Hierbei trennt man den Peak (lokales Maximum über der Massenachse) der zu messenden Masse von den Flanken, die durch benachbarte Massen hervorgerufen werden, und von anderen gleichstrombehafteten Störgrößen.

Dadurch wird erfindungsgemäß das durch das Testgas erzeugte Nutzsignal von Störgrößen befreit, insbesondere von der langsamen Drift des Wasseruntergrundes bei oder nach dem Abpumpen. Der Einfluss der M3-Komponente auf das Messergebnis der M4-Komponente wird eliminiert. Der Wasseruntergrund wird beseitigt. Daher können selbst kleinste Mengen von Helium trotz Anwesenheit von Wasser nachgewiesen werden.

Die erfindungsgemäße Leckraten-Messvorrichtung zeichnet sich dadurch aus, dass in einem ausgewählten Messbereich, der dem bei einer Massenzahl auftretenden Peak des Massenspektrums entspricht, eine periodisch variierende Modulationsgröße angelegt wird und dass eine Filtervorrichtung aus dem erzeugten Signal ein Messsignal mit der doppelten Frequenz der Modulationsgröße zur Auswertung herauszieht.

Hierbei wird der Umstand ausgenutzt, dass der Spitzenbereich der M4-Kurve eine Nichtlinearität darstellt. In diesem Bereich wird die die Ablenkung beeinflussende Einflussgröße vorzugsweise sinusförmig moduliert. Dabei entsteht ein erstes Modulationsprodukt, das wegen der Nichtlinearität die doppelte Modulationsfrequenz hat, und ein weiteres Modulationsprodukt, das infolge des linearen Ausläufers der benachbarten M3-Kurve dieselbe Frequenz hat wie die Modulationsspannung. Die beiden Spannungen können im Hinblick auf ihre Frequenz und/oder Phasenlage mit der Modulationsfrequenz verglichen werden, um sie voneinander zu trennen. Auf diese Weise kann das M4-Signal wirksam von den Einflüssen des benachbarten M3-Signals befreit werden.

Die erfindungsgemäße Leckraten-Messvorrichtung kann auf unterschiedliche Weise benutzt werden:
1. Das Messobjekt (der Behälter) wird evakuiert. Von außen wird Helium aufgesprüht. Das aus dem Behälter abgesaugte Gas wird auf Heliumspuren untersucht. Hier entsteht ein Zeitgewinn durch die erfindungsgemäße Messung.
2. Das Messobjekt befindet sich in einem großen Rezipienten, der abgepumpt wird. Das Messobjekt wird dann mit Helium gefüllt. Hier wird ein Zeitgewinn erreicht, da nach z.B. ca. 3 Minuten, statt üblicherweise 10 Minuten, eine brauchbare quantitative Leckaussage gemacht werden kann. (Die tatsächlichen Zeiten sind volumenabhängig.)
3. Das Messobjekt befindet sich in einem großen Rezipienten und enthält bereits Helium. Der Rezipient wird evakuiert. Auch hier liegt ein Zeitgewinn vor, da früher (nach z.B. 3 Minuten) eine brauchbare quantitative Leckaussage gemacht werden kann. In diesem Fall kann aber auch genauer gemessen werden, da man keine Möglichkeit hat, den Nullpunkt zu bestimmen (das Helium lässt sich nicht "abschalten"). Ohne die erfindungsgemäße Messanordnung hat man keine Möglichkeit, das Helium vom Restwasser zu unterscheiden.

Die Erfindung ermöglicht eine sehr empfindliche Leckraten-Messung, wobei die Leckanzeige bis hin zu z.B. 1E-10 mbar 1/sec erstreckt werden kann.

Im Folgenden wird unter Bezugnahme auf die Zeichnungen ein Ausführungsbeispiel der Erfindung näher erläutert.

Es zeigen:
- Fig. 1: den generellen Aufbau der Leckraten-Messvorrichtung,
- Fig. 2: eine schematische Darstellung der Funktion des Sektorfeld-Massenspektrometers,
- Fig. 3: einen charakteristischen Verlauf eines Scans der Anodenspannung mit der vom Massenspektrometer gelieferten Signalkurve,
- Fig. 4: den wesentlichen Teil des Funktionsverlaufs von Figur 3, getrennt nach Funktionsanteilen von Masse M3 und Masse M4,
- Fig. 5: die Darstellungen der Modulationsspannung des Massenspektrometers und der daraus resultierenden Signalspannungen für die Masse M4 und die Masse M3, und
- Fig. 6: die zeitlichen Verläufe des Einflusses von Wasser und Helium auf das Messergebnis.

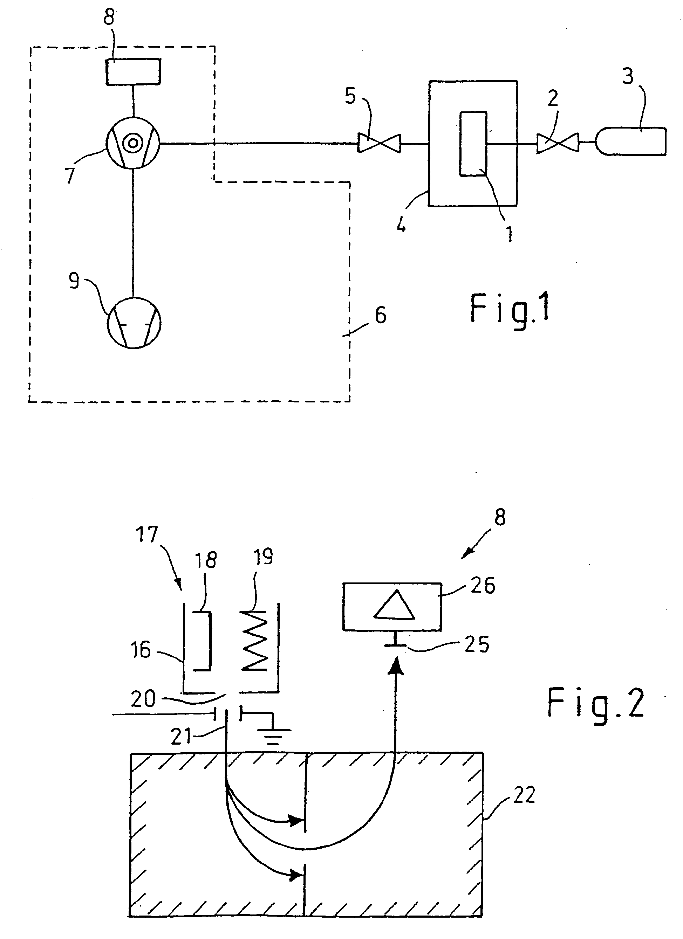

Den generellen Aufbau einer Leckraten-Messvorrichtung nach dem Gegenstromprinzip zeigt Figur 1. Ein Prüfling 1, der auf Dichtheit zu prüfen ist, ist über ein Ventil 2 mit einer Prüfgasquelle 3 verbunden, die Helium liefert. Der Prüfling 1 wird in einer gasdichten Prüfkammer 4 untergebracht. Von der Prüfkammer 4 führt eine ein Ventil 5 enthaltende Leitung zu dem Prüfgerät 6. Diese Leitung ist an eine Turbomolekularpumpe 7 angeschlossen, deren Eintrittsseite mit einem Massenspektrometer 8 verbunden ist und deren Austrittsseite mit einer Vorvakuumpumpe 9 verbunden ist. Die Molekularpumpe 7 erzeugt ein Hochvakuum, wodurch Helium, das durch ein Leck des Prüflings 1 in die Prüfkammer 4 gelangt ist, angesaugt wird. In der Molekularpumpe 7 gelangt das Helium im Gegenstrom zur Förderrichtung in das Massenspektrometer 8, um identifiziert zu werden.

Das Massenspektrometer 8 ist ein Bahn-Spektrometer, insbesondere ein Sektorfeld-Massenspektrometer, wie es in Figur 2 schematisch dargestellt ist. Das Spektrometer enthält eine Ionenquelle 17 mit einer Kathode 18 und einer beheizten Anode 19. Die Ionenquelle 17 ist mit einer Abschirmung 16 umgeben, die eine Blendenöffnung 20 enthält, durch die ein Ionenstrahl 21 austritt. In einem Magnetfeld 22 wird der Ionenstrahl 21 abgelenkt. Der abgelenkte Ionenstrahl trifft auf einen Ionenfänger 25, der mit einem hochempfindlichen Elektrometerverstärker 26 verbunden ist. Dieser verstärkt den sehr kleinen Ionenstrom. Üblicherweise ist der Verstärker 26 ein Gleichstromverstärker, der bis zum femto-Ampere-Bereich (10⁻¹⁵ A) arbeitet.

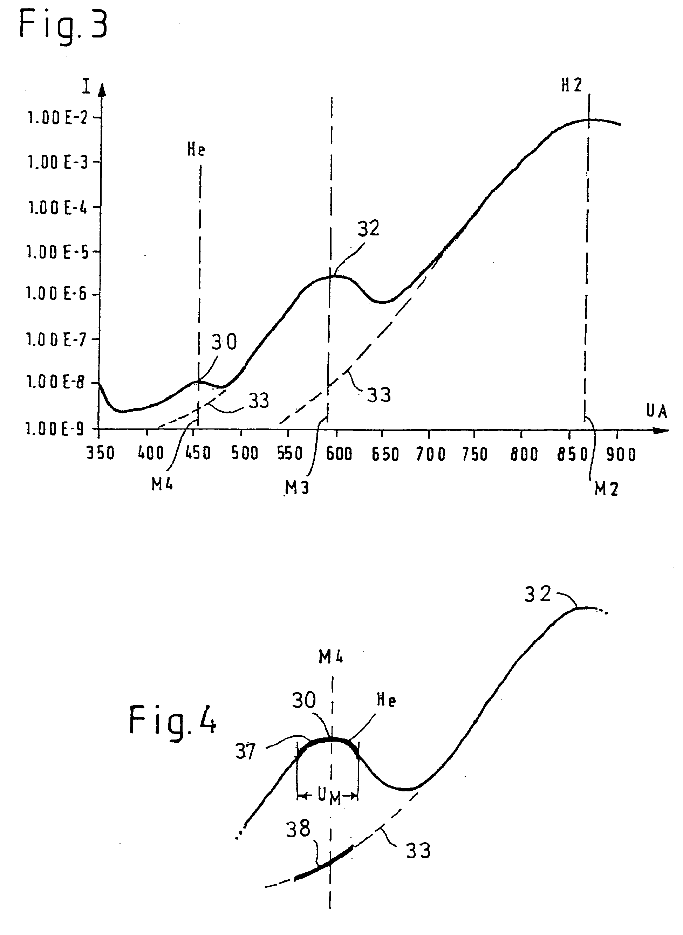

Der bisher beschriebene Aufbau des Massenspektrometers 8 ist bekannt. Mit einem derartigen Massenspektrometer erhält man in der in Figur 1 dargestellten Messanordnung beispielsweise die in Figur 3 dargestellte Kurve, wenn man einen Scan über die Anodenspannung durchfährt. In Figur 3 ist entlang der Abszisse die Anodenspannung aufgetragen und entlang der Ordinate der von dem Verstärker 26 gemessene Strom I. Dabei hat E-2 die Bedeutung von 10⁻², E-8 die Bedeutung von 10⁻⁸ usw.

Wird die Anodenspannung U_{A} der Anode 19 kontinuierlich erhöht, so gelangen jeweils Ionen mit einer anderen spezifischen Masse auf dem vorgesehenen Ionenweg 21 zu dem Ionenfänger 25. Helium hat die Masse M4. Daher entsteht an der der Masse M4 entsprechenden Stelle ein Peak 30, dessen Höhe von der Menge des detektierten Heliums abhängt.

Bei der der spezifischen Masse M3 entsprechenden Anodenspannung entsteht ein Peak 32, der viel höher ist als der Peak 30. Der Peak 32 ist auf das Vorhandensein von Wasser (H₂O) zurückzuführen. Daraus entstehen H₂-Ionen, die einen Anteil der spezifischen Masse M3 haben. Solange in der Prüfkammer 4 Wasser vorhanden ist, beherrschen die Peaks der Massen 3 (32) und 2 das gesamte Diagramm.

Das Sektorfeld-Massenspektrometer 8 hat eine begrenzte Selektivität. Dies bedeutet, dass die Peaks 30 und 32 nicht sehr schmal sind, sondern eine gewisse Breite haben. Der Peak 32 hat in Figur 3 gestrichelt dargestellte Ausläufer 33, die sich bis in den Bereich der Masse M4 erstrecken und sich mit der Helium-Komponente überlagern. Dies führt zu dem bereits erwähnten Wasseruntergrund. Die Einflüsse der sehr starken Komponenten M2 und M3 wirken sich auf die Komponente M4 aus und verfälschen deren Höhe.

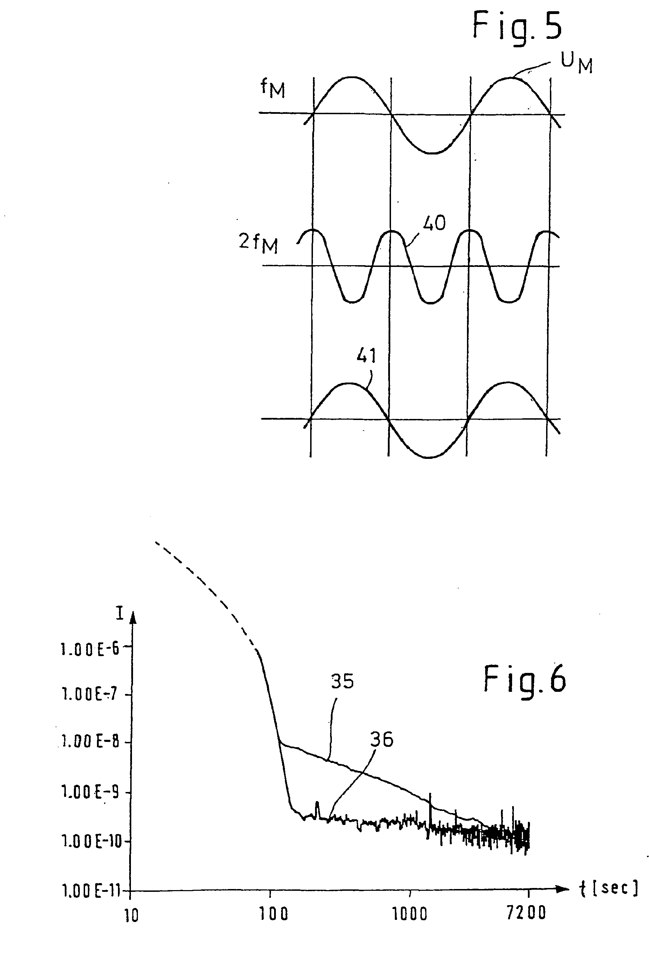

In Figur 6 ist die Leckrate, die aus dem Strom I, der von dem Verstärker 26 gemessen wird, errechnet wurde, längs der Ordinate in logarithmischem Maßstab dargestellt, und längs der Abszisse die Pumpzeit t in Sekunden, ebenfalls in logarithmischem Maßstab. Gemessen wurde bei der spezifischen Masse M4. Der Kurvenverlauf 35 zeigt den Fall, dass die Anodenspannung Ua in üblicher Weise konstant gehalten wird und die Leckrate aus dem Gleichstrom errechnet wird. Die Kurve 36 zeigt den Fall, dass die Anodenspannung moduliert und die Leckrate aus einer Frequenzkomponente (der doppelten Modulationsfrequenz) des Stromes errechnet wird. Die Kurve 35 zeigt den bei einer Leckrate von ca. 1 x 10⁻⁸ mbar 1/sec beginnenden Wassereffekt, der sich anschließend wegen des Verschwindens des Wassers verringert. Dem Wassereffekt ist ein flacher Signalverlauf der Kurve 36 von einigen 10⁻¹⁰ mbar 1/sec unterlagert.

Die Auswertung der nur einen Frequenzkomponente beseitigt die M3- und M2-Ausläufer und damit die langsame Drift der Kurve 35. Während das gewünschte Nutzsignal üblicherweise erst nach etwa 5.000 Sekunden verfügbar wäre, ist es nunmehr bereits nach etwa 200 Sekunden vorhanden. Damit ist eine erhebliche Verkürzung der Messzeit verbunden. Der langsam verschwindende Einfluss der M3-Komponente, nämlich der Wasserkomponente, wird eliminiert.

Zur Herausfilterung der M4-Komponente erfolgt eine Modulation einer die Ablenkung beeinflussenden Einflussgröße, z.B. der Anodenspannung, des Massenspektrometers mit einer periodischen Modulationsspannung U_{M}. Die Modulationsspannung U_{M} ist eine sinusförmige Spannung mit einer relativ niedrigen Modulationsfrequenz im Bereich von z.B. etwa 1 Hz. Mit der Modulationsspannung U_{M} wird die Anodenspannung im Peak 30 (Figur 4) moduliert, so dass die Modulationsspannung U_{M} periodisch den in Figur 4 verstärkt dargestellten bogenförmigen Verlauf 37 durchläuft. Der Ausläufer 33 des Einflusses der Masse M3 hat im Bereich der Modulationsspannung einen im Wesentlichen geradlinigen Verlauf 38.

Der bogenförmige Verlauf 37 bildet eine Nichtlinearität, die bewirkt, dass aus dem Modulationssignal U_{M} ein Signal 40 mit der Frequenz 2 f_{M} entsteht, also der doppelten Frequenz des Modulationssignals. Dagegen bewirkt der Verlauf 38 ein Signal 41, dessen Frequenz und Phasenlage dem Modulationssignal entspricht.

Die am Verstärker 26 auftretenden überlagerten Signale 40 und 41 werden zur Trennung z.B. einem Lock-In-Verstärker zugeführt, der das Modulationssignal U_{M} als Referenzsignal erhält. Der Lock-In-Verstärker ist ein phasenselektiver Verstärker, der die Signale 40 und 41 voneinander trennt. Auf diese Weise kann das Signal 40, das ausschließlich auf den Einfluss der Masse M4 zurückgeht, selektiert werden. Dadurch wird der Einfluss des Wasseruntergrundes eliminiert.

Das anhand der Figuren 4 und 5 beschriebene Verfahren eignet sich sowohl für den Fall, dass der Verstärker 26 ein Wechselstromverstärker ist, als auch für den Fall, dass dieser Verstärker ein Gleichstromverstärker ist. Durch die Phasenselektion des Signals 40 verschwindet auch der Gleichstromanteil und andere Offseteffekte.

## Patentansprüche

1. Verfahren zur Leckraten-Messung eines nachzuweisenden Gases bestimmter molekularer Masse (M4) mit einem Bahn-Spektrometer (8) mit masseabhängiger Ablenkung von Gasionen und Bestimmung der Leckrate mittels Messung eines Stromes, der durch die Ionen erzeugt wird, die einen Ionenfänger (25) des Bahn-Spektrometers treffen, wobei ein der jeweiligen Stromstärke entsprechendes Stromsignal ausgewertet wird und das einer bestimmten Masse entsprechende Stromsignal von Stromsignalen benachbarter Massen überlagert ist, wobei mindestens eine die Ablenkung beeinflussende Einflussgröße des Bahn-Spektrometers (8) um einen Punkt der höchsten Empfindlichkeit für die nachzuweisende Masse (M4) moduliert wird, um das Stromsignal der nachzuweisenden Masse von den Stromsignalen der benachbarten Massen durch Auswertung mindestens eines Frequenzanteils zu trennen,
**dadurch gekennzeichnet,**
**dass** die Modulationstiefe auf den Spitzenbereich (37) des Stromsignals beschränkt ist, in dem der Ausläufer (33) des Einflusses der benachbarten Massen einen im wesentlichen geradlinigen Verlauf hat.

2. Verfahren nach Anspruch 1, **dadurch gekennzeichnet, dass** die Modulation der mindestens einen Einflussgröße periodisch durchgeführt wird und dass eine Filtervorrichtung aus dem erzeugten Stromsignal ein Messsignal (40) mit der doppelten Frequenz der Modulationsgröße zur Auswertung herauszieht.

3. Verfahren nach Anspruch 1 oder 2, **dadurch gekennzeichnet, dass** die Modulation beendet wird, wenn der auf einer abweichenden Massezahl beruhende Anteil (33) des Spektrums auf einen bestimmten Wert abgesunken ist.

4. Leckraten-Messvorrichtung mit einer Vakuum-Pumpvorrichtung (7) zum Abpumpen von Gas, einem Bahn-Massenspektrometer (8) mit masseabhängiger Ablenkung von Ionen des Gases und Bestimmung der einen Ionenfänger (25) treffenden Ionenmenge mit einem an den Ionenfänger angeschlossenen Verstärker, wobei in einem ausgewählten Messbereich, der dem bei einer Massenzahl auftretenden Peak (30) des Massenspektrums entspricht, eine periodisch variierende Modulationsgröße (U_{M}) angelegt wird und dass eine Filtervorrichtung aus dem erzeugten Signal ein Messsignal (40) mit der doppelten Frequenz der Modulationsgröße (U_{M}) zur Auswertung herauszieht, **dadurch gekennzeichnet,**
**dass** der ausgewählte Messbereich auf einen Bereich um den der genannten Massenzahl entsprechenden Peak (30) beschränkt ist, in welchem der Ausläufer (33) des Einflusses der benachbarten Massen einen im wesentlichen geradlinigen Verlauf hat.

5. Leckraten-Messvorrichtung nach Anspruch 4, **dadurch gekennzeichnet, dass** die Modulation beendet wird, wenn der auf einer abweichenden Massezahl ruhende Anteil (33) des Spektrums auf einen bestimmten Wert abgesunken ist.

6. Leckraten-Messvorrichtung nach Anspruch 4 oder 5, **dadurch gekennzeichnet, dass** die Filtervorrichtung ein Lock-In-Verstärker ist, der als Referenzsignal das Modulationssignal (U_{M}) erhält.

## Claims

1. A method for leak rate measurement of a gas to be detected having a specific molecular mass (M4), performed by use a strip spectrometer (8) arranged for mass-dependent deflection of gas ions and determination of the leak rate by measuring a current generated by the ions impinging on an ion catcher (25) of the strip spectrometer, wherein a current signal corresponding to the respective current intensity is evaluated and the current signal corresponding to a specific mass is superposed with current signals of adjacent masses, wherein at least one influencing quantity of the strip spectrometer (8) influencing the deflection is modulated about a point of highest sensitivity for the mass (M4) to be detected, in order to separate the current signal of the mass to be detected from the current signals of the adjacent masses by evaluating at least one frequency portion,
**characterized in**
**that** the modulation depth is restricted to the peak region (37) of the current signal in which the extension (33) of the influence of the adjacent masses has a substantially linear course.

2. The method according to claim 1, **characterized in that** the modulation of the at least one influencing quantity is performed periodically and that, for evaluation, a filter means extracts from the generated current signal a measurement signal (40) having the twice the frequency of the modulation quantity.

3. The method according to claim 1 or 2, **characterized in that** the modulation is terminated when the portion (33) of the spectrum caused by a deviating mass number has decreased to a predetermined value.

4. A leak rate measurement device comprising a vacuum pump means (7) for pumping off gas, a strip mass spectrometer (8) arranged for mass-dependent deflection of ions of the gas and for determination of the quantity of ions impinging on an ion catcher (25) by use of an amplifier connected to the ion catcher, wherein, in a selected measurement range corresponding to the peak (30) of the mass spectrum occurring at a mass number, a periodically varying modulation quantity (U_{M}) is applied, and wherein, for evaluation, a filter means extracts from the generated signal a measurement signal (40) having the twice the frequency of the modulation quantity (U_{M}), **characterized in**
**that** the selected measurement range is restricted to a region around the peak (30) corresponding to said mass number in which the extension (33) of the influence of the adjacent masses has a substantially linear course.

5. The leak rate measurement device according to claim 4, **characterized in that** the modulation is terminated when the portion (33) of the spectrum caused by a deviating mass number has decreased to a predetermined value.

6. The leak rate measurement device according to claim 4 or 5, **characterized in that** the filter means is a lock-in amplifier receiving the modulation signal (U_{M}) as a reference signal.

## Revendications

1. Procédé de mesure du taux de fuites d'un gaz à identifier, de masse moléculaire déterminée (M4), avec un spectromètre de trajectoire (8) avec une déflexion, dépendant de la masse, d'ions du gaz, et détermination du taux de fuites par mesure d'un courant produit par les ions qui rencontrent un capteur d'ions (25) du spectromètre de trajectoire, un signal de courant correspondant à la force de chaque courant concerné étant interprété et le signal de courant correspondant à une masse déterminée étant recouvert par des signaux de courant de masses voisines, au moins l'une des grandeurs d'influence du spectromètre de trajectoire (8) qui influence la déflexion étant modulée autour d'un point de la sensibilité la plus élevée pour la masse (M4) à déterminer, afin de séparer le signal de courant de la masse à identifier des signaux de courant des masses voisines par interprétation d'au moins une composante de fréquence,
**caractérisé en ce que** la profondeur de modulation est limitée à la zone de pointe (37) du signal de courant, dans laquelle le prolongement (33) de l'influence des masses voisines a un tracé sensiblement rectiligne.

2. Procédé suivant la revendication 1, **caractérisé en ce que** la modulation d'au moins l'une des grandeurs d'influence est exécutée périodiquement et **en ce que**, pour l'interprétation, un dispositif de filtrage déduit, à partir du signal de courant produit, un signal de mesure (40) avec la fréquence double de la grandeur de modulation.

3. Procédé suivant la revendication 1 ou 2, **caractérisé en ce que** la modulation est terminée quand la composante (33) du spectre, reposant sur un nombre de masse différent, a été réduite à une valeur déterminée.

4. Dispositif de mesure du taux de fuites, comportant un dispositif de pompe à vide (7) pour l'évacuation de gaz par pompage, un spectromètre de masse de trajectoire (8) avec une déflexion, dépendant de la masse, d'ions du gaz et une détermination de la quantité d'ions rencontrant un capteur d'ions (25), avec un amplificateur raccordé au capteur d'ions, étant entendu que, dans une zone de mesure choisie qui correspond au pic (30) du spectre de masse apparaissant pour un nombre de masse, une grandeur de modulation (U_{M}) variant périodiquement est associée, et qu'un dispositif de filtrage, pour l'interprétation, déduit du signal produit un signal de mesure (40) avec une fréquence double de la grandeur de modulation (U_{M}),
**caractérisé en ce que** la zone de mesure choisie est limitée à une zone entourant le pic (30) correspondant au nombre de masse indiqué, zone dans laquelle le prolongement (33) de l'influence des masses voisines présente un tracé sensiblement rectiligne.

5. Dispositif de mesure du taux de fuites suivant la revendication 4, **caractérisé en ce que** la modulation est terminée quand la composante (33) du spectre, reposant sur un nombre de masse différent, a été réduite à une valeur déterminée.

6. Dispositif de mesure du taux de fuites suivant la revendications 4 ou 5, **caractérisé en ce que** le dispositif de filtrage est un amplificateur à blocage qui reçoit, comme signal de référence, le signal de modulation (U_{M}).
